Europäisches Patentamt

European Patent Office

Office européen des brevets

(19)

(11) Publication number: **0 309 094**
**A1**

## (12) EUROPEAN PATENT APPLICATION

(21) Application number: **88307774.5**

(22) Date of filing: **23.08.88**

(51) Int. Cl.⁴: **G01B 21/04**

(30) Priority: **27.08.87 GB 8720276**

(43) Date of publication of application:
**29.03.89 Bulletin 89/13**

(84) Designated Contracting States:
**CH DE FR GB IT LI SE**

(71) Applicant: **VISION ENGINEERING LIMITED**
**Send Road**
**Send Woking Surrey GU23 7ER(GB)**

(72) Inventor: **Freeman, Robin John Aquarius**
**The Fairway Bagshot Road Worplesdon**
**Guildford Surrey(GB)**

(74) Representative: **Loughrey, Richard Vivian**
**Patrick et al**
**HUGHES CLARK & CO 63 Lincoln's Inn Fields**
**London WC2A 3JU(GB)**

(54) Precision slides and position encoders therefor.

(57) A position transducer for an inspection table or slide (10) movable along a linear axis includes a pair of transducers (16. 20) spaced apart in a direction transverse to the axis to enable correction of errors in indication of the position or displacement of the table due to non-linearity of movement of the table. The outputs of the encoders are compared to produce an error signal and a proportion of the error signal, dependent upon the transverse position of a reference point (23) relative to the table (10), is utilised to compensate the output of one of the transducers (16. 20) to produce a corrected position indication.

FIG.1.

## PRECISION SLIDES AND POSITION ENCODERS THEREFOR

This invention relates to precision slides and to position transducers utilised for providing signals indicative of the position of a movable slide element relative to another element.

Apparatus used for inspecting and measuring manufactured workpieces is known in which a workpiece to be measured is mounted on a table arranged to be moved in mutually orthogonal directions to bring different portions of the workpiece into alignment with an inspection device such as a microscope. The table is usually mounted on precision slides arranged perpendicular to one another to enable the table to be moved with precision along axes determined by the slides. Position encoding means are provided to indicate the position of the table relative to the inspection device. The dimensions of the workpiece can be measured with high accuracy by moving the table to align a predetermined point on the workpiece with the inspection device and noting the relative position of the table. The table is then moved to align a second predetermined point of the workpiece with the inspection device and the position of the table is noted. The difference in the two positions of the table thus provides a measurement of the distance between the two predetermined points on the workpiece. In order to enable high accuracy to be attained, the table and the slides on which it is mounted are usually of a rigid and stable construction. The bearing surfaces of the slides need to be linear to a very high degree of accuracy. Any non-linearity of the bearing surfaces will result in non-linear movement of the table and the positions of the table indicated by the position transducers will be subject to error. As a consequence measurements carried out on a workpiece will be inaccurate.

In order to achieve a high degree of linearity the bearing surfaces are precision ground. When it is desired to make measurements to a very high accuracy, for example of the order of one micron or less, it has been necessary to work the critical bearing surfaces to an optical finish. It has also been common to construct the table of granite or similar material in an attempt to achieve the required stability of the table relative to the inspection device.

According to one aspect of the invention a position transducer system for providing an indication of the position or displacement of a first member relative to a second member comprises a first transducer responsive to the relative position of said first and second members in a first direction to produce a first signal; a second transducer spaced from the first transducer in a second direction perpendicular to said first direction, said second transducer being responsive to the relative position of said first and second members in said first direction to produce a second signal; correction means for deriving an error signal from the first and second signals and for utilising said error signal to compensate the first signal.

Preferably the signals are electrical signals. A convenient form of transducer for use in the transducer system is an electro-optical device.

According to another aspect of the invention a precision slide movable in first and second mutually perpendicular directions and provided with a first position transducer system as hereinbefore defined to provide a compensated signal indicative of the position or displacement of said table relative to a reference point in the first direction and provided with a second position transducer system as hereinbefore defined to provide a compensated signal indicative of the position of the slide relative to said reference point in said second direction.

Embodiments of the invention will now be described by way of example with reference to the drawings in which:-

Figure 1 illustrates an inspection table mounted for linear displacement along a single axis,

Figure 2 illustrates the inspection table of Figure 1 and the effect of non-linearity of displacement of the table on the accuracy of position indication,

Figure 3 shows an inspection table provided with position transducers in accordance with the invention,

Figure 4 shows diagrammatically the position transducers and associated circuits of the inspection table shown in Figure 3 arranged for movement on a single axis,

Figure 5 illustrates a three axis measurement apparatus having a table mounted for displacement along two mutually perpendicular axes,

Figure 6 shows diagrammatically the position transducers and associated electronic circuits of the inspection apparatus of Figure 5 and

Figures 7 and 8 illustrate the effects of non-linear displacement when a workpiece is displaced on two axes.

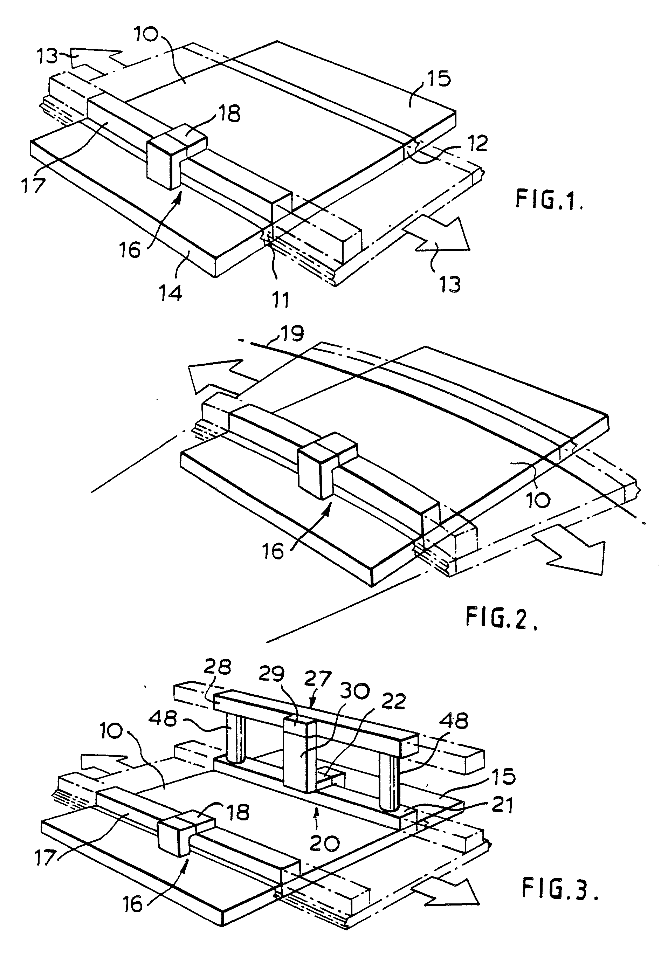

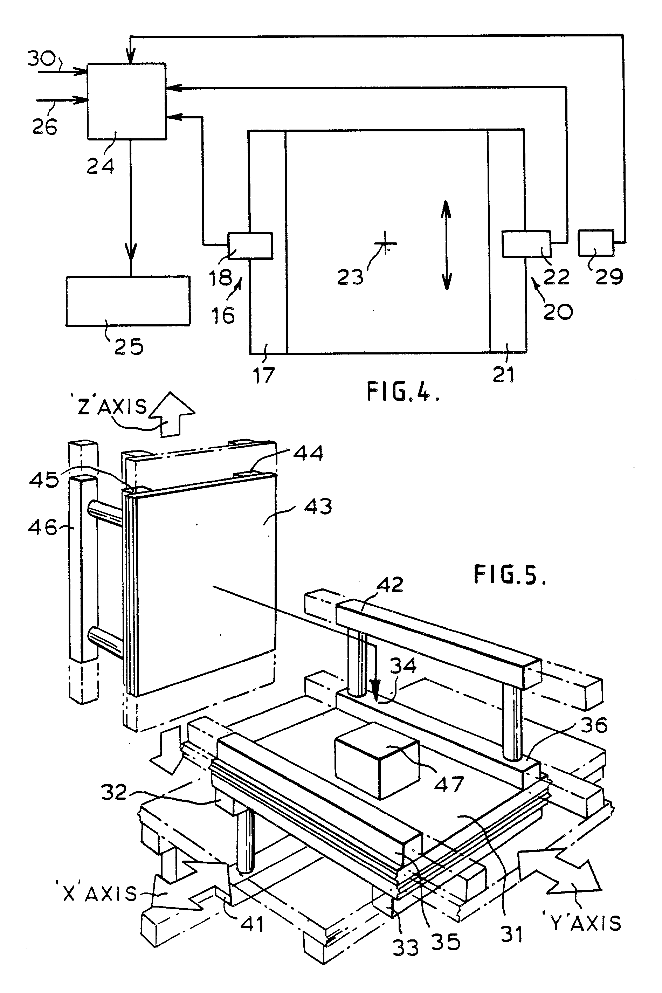

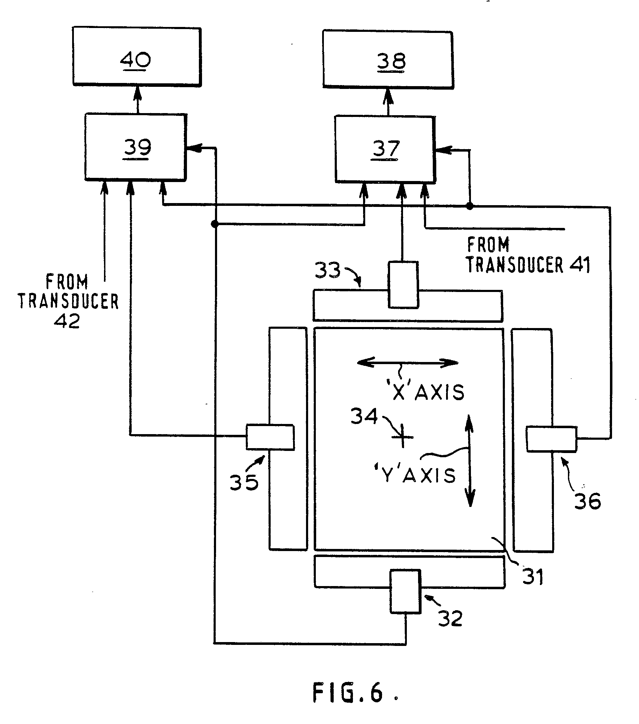

Referring first to Figure 1 an inspection table 10 is mounted on slides 11, 12 for movement along an axis extending in a direction indicated by arrows 13 relative to static frame components 14, 15. In order to provide an indication of the position of the table 10 relative to the static frame components 14, 15 a linear position transducer 16 is provided. The position transducer 16 comprises a glass encoder strip 17 carrying precision code markings secured to the table 10 and an electro-optical sensor or reading head 18 mounted on the frame and arranged to sense the code markings on the glass strip 17. The electro-optical sensor consists of a source of illumination and photo-electric cells operative to provide electrical signals representing the code markings as they are brought into alignment with the sensor. The code markings may be in the form of the well known Gray Scale in which each position along the encoder strip 17 is defined by a unique combination of code markings. As the table is displaced along an axis in the direction of arrows 13, electrical signals are generated by the transducer 16 indicating the position of the table 10 relative to the static frame components 14, 15. Thus if a workpiece to be inspected and/or measured is mounted on the table 10, the workpiece can be traversed in the direction 13 past a point of reference. If the slides 11, 12 on which the table is mounted are precisely linear the table will move along a straight line and the position of the workpiece on the table relative to the point of reference will be precisely represented by the electrical signals from the position transducer 16. However in practice when attempting to achieve measurements accurate to the order of one micron or less it has been found that non-linearity of the bearing surfaces of the slides giving rise to a deviation of only 1 micron from a linear movement of the table over a travel of 200mm can result in a measurement error of 12 microns. This non-linearity of movement of the table often results in the table having a rotational component of movement, as shown in Figure 2, in addition to its linear component of movement. As a result the electrical signals from the transducer 16 will represent varying displacement of the workpiece dependent upon the distance of the point of reference from the position transducer 16. For example, as shown in Figure 2, if the point of reference lies on the line 19 the transducer 16 will indicate a smaller displacement of the workpiece relative to the reference point than the actual displacement of the workpiece relative to the reference point. On the hand if the rotational component has a curvature inverse to that shown in Figure 2, the electrical output from the transducer will indicate a greater displacement of the workpiece than the actual displacement of the workpiece relative to the point of reference. Referring now to Figures 3 and 4, in accordance with the invention, the table is provided with a position transducer arrangement which compensates for these errors in indication of displacement and provides a more accurate indication of the magnitude of displacement of the workpiece relative to the point of reference. The table 10 is provided with a first transducer 16 as described in relation to Figure 1 and in addition a second transducer 20 is provided. The second transducer 20 is of similar construction to that of transducer 16 and comprises a glass strip 21 carrying code markings and an electro-optical sensor 22. If a point of reference 23 (Figure 4) is exactly midway between the transducers 16 and 20 any error in indication of the displacement of a workpiece relative to the point of reference, due to a rotational component of movement of the table, by transducer 16 will be equal and of opposite sign to the error in indication of displacement provided by the transducer 20. Compensation for error in the displacement indication by the transducer 16 is effected by applying the electrical signals from both transducers to a correction circuit 24 which compares the electrical signals from the two transducers to produce a net error signal representing the difference in actual position of the workpiece as compared with the position indicated by the transducer 16. This net error signal is then added to the signal from the transducer 16 by the circuit 24 to provide a position indicating signal, representing the actual position of the workpiece relative to the reference point 23, to a display 25. It will be appreciated that if the table is not subject to any rotational component of movement in its movement in the direction of arrows 13, the signals from both transducers 16 and 20 will be equal and the net error signal will be zero. With the two transducers equally spaced from the reference point, the net error signal will be equal to half the difference in indications from the two transducers. However if the table is laterally displaced relative to the reference point so that one transducer is nearer to the reference point than the other transducer, for example transducer 16 is nearer than transducer 20, the net error signal added to the indication from transducer 16 is a fraction of the difference between the indications from the transducers, the fraction being equal to the ratio of the distance of the reference point from the transducer 16 to the distance of the reference point from the transducer 20. A lateral displacement signal representing the lateral position of the table relative to the inspection point is input on line 26 to the comparison circuit 24 and the circuit utilises this displacement signal to calculate the fraction of error signal to use as a correction to the position indication from transducer 16. The displacement signal may be input manually, but more conveniently it is generated from a further transducer responsive to movement of the table in a direction perpendicular to the arrows 13. This will be more fully described hereinafter with reference to the embodiment shown in Figures 5 and 6. Thus the transducers 16 and 20 and associated circuits compensate for non-linearity of displacement of the table 10 in respect of rotational components of movement parallel to the plane of the table. However, the table may also have rotational components of movement in planes perpendicular to the plane of the table so that if the part of the workpiece which is being inspected or measured lies at a substantial distance from the table, displacement of this part of the workpiece may be indicated inaccurately by the transducers 16 and 20. In order to compensate for such errors a third transducer 27 is provided. The third transducer 27 has an encoder strip 28, aligned with the second encoder strip 21 in a direction transverse to displacement of the table, and spaced away from the encoder strip 21 in a direction perpendicular to the plane of the table by mountings 48. The third transducer 27 has a third sensor 29 carried by a support 30 on the frame component 15 to co-operate with the encoder strip 28. The electrical signals output from the third transducer are input to the correction circuit 24 and, in the same manner as hereinbefore described in relation to compensating for errors in indications of position from transducers 16 and 20, the outputs from transducers 20 and 27 are compared to produce an error signal and a fraction of this error signal, depending upon the displacement from the table of the part of the workpiece being measured is utilised to compensate the position indication signal obtained from the transducers 16, 20 and 27. The magnitude of the displacement of the workpiece from the table may be input to the correction circuit 24 on a line 30.

Figures 5 and 6 show an inspection apparatus having an inspection table 31 similar to that shown in Figures 3 and 4 but with the table mounted on two sets of slides to permit movement of the table along two mutually perpendicular axes. One set of slides permits displacement of the table 31 in an 'X' axis direction while a second set of slides permits displacement of the table in a 'Y' axis direction perpendicular to the 'X' axis direction. A first set of transducers 32, 33, 41 is positioned to provide first electrical signals representing the position of the table relative to a point of reference 34 in the 'X' axis direction. A second set of transducers 35, 36, 42 are positioned to provide second electrical signals representing the position of the table 31 relative to the reference point 34 in the 'Y' axis direction. The first electrical signals from transducers 32, 33, 41 are applied to a correction circuit 37 and, as described in the embodiment shown in Figures 3 and 4, the circuit 37 generates a corrected position signal which is displayed by display device 38 to indicate the position of the table in the 'X' axis direction relative to the reference point 34. Similarly second electrical signals from transducers 35, 36, 42 are applied to another correction circuit 39 to generate a corrected position signal for display by display device 40 to indicate the position of the table in the 'Y' axis direction relative to the reference point 34. Since the table 31 can be displaced in two mutually perpendicular directions, the lateral position of both sets of transducers relative to the reference point will vary. Considering first the lateral position of the transducers 32, 33 relative to the reference point, it will be realised that the position signal obtained from the transducer 36 indicates the lateral position of the first set of transducers relative to the reference point and hence this signal can be utilised to calculate the fraction of error signal obtained from the first transducers 32, 33, 41 to be used in compensation of the signal from transducer 32. Similarly the position signal from transducer 32 is utilised to calculate the fraction of error signal to be used in correcting the position signal obtained from the set of transducers 35, 36, 42.

It will be appreciated that in the embodiment shown in Figures 5 and 6, the table 31 would be mounted on an intermediate slide member and movable in a first direction relative to the intermediate slide member. The intermediate slide member would be mounted on a fixed frame member and movable in a second direction, perpendicular to the first direction, relative to the frame member. Accordingly one pair of transducers would be mounted to respond to movement of the table relative to the intermediate slide member in the first direction and the other pair of transducers would be mounted to respond to movement of the intermediate slide member relative to the frame member in the second direction.

The transducers 32, 33 and 35, 36 described hereinbefore provide correction for non-linearity of movement of a table or slide in a plane parallel to the plane of the table while correction for components of non-linearity in respect of displacement along the 'X' axis in a second plane perpendicular to the plane of the table is provided by the transducer 41 responsive to movement of the table or slide in the 'X' axis direction and spaced apart from the transducer 32 in the second plane. The outputs from transducers 41 and 33 are processed in the same manner as that from the transducers 32 and 33 to provide a corrected position indication at a specified distance from the table or slide. Thus transducer 33 is spaced from transducer 32 in a plane parallel to the plane of the table 31 and the transducer 41 is spaced from transducer 32 in a plane perpendicular to the plane of the table, all three transducers being responsive to displacement of the table in the 'X' axis direction. Similarly the transducer 42 is provided spaced from transducer 36 in a third plane perpendicular to the plane of the table and the outputs from the transducers 42 and 36 are processed to provide a corrected position signal at the specified distance from the table. It will be appreciated that the error correction provided by transducers 41 and 42 is of particular significance when parts of a workpiece 47 at a distance from the table are to be measured.

As seen in Figure 5, a mounting for an inspection device at the reference point 34 is provided by a slide 43 displaceable along a 'Z' axis direction mutually perpendicular to the 'X' and 'Y' axis directions. This slide 43 is provided with three position transducers 44, 45 and 46 which operate, in the same manner as the transducers 32, 33 and 41, to provide an indication of the position or displacement of the slide 43 and the inspection device carried thereby along the 'Z' axis direction. The corrected position indication from the transducers 44, 45 and 46 may be utilised to input a signal to the correction circuits 37 and 39 to determine the spacing of the workpiece from the table 31.

While the transducers may be electro-optic devices as described hereinbefore, other suitable position transducers may be used. The transducer system may be used for the precise positioning of any movable component in a single axis direction or in multi-axis directions for purposes other than measurement of workpieces, for example the transducer system may be used in the precise positioning of a workpiece and/or tool in a machine tool. Thus at the point of reference shown in the drawings, a tool may be mounted for machining a workpiece carried by the table.

It is usually convenient to mount the transducers at opposite sides of the inspection table. However if desired the transducers may be mounted at other positions with the transducers spaced apart laterally. In some situations it may even be convenient to mount the transducers of a pair toward the same side of the table. With such an arrangement the reference point would not necessarily lie between the transducers and instead of utilising a fraction of the error signal for compensation of the position indication from one of the transducers, a multiple of the error signal would be used.

While it will usually be advantageous to utilise three transducers to obtain a position indication corrected for non-linear components of displacement of the table in two mutually perpendicular planes, other arrangements may be utilised. For example, two pairs of transducers may be provided, one pair being utilised to correct for non-linear components in one plane and the other pair being utilised to correct for non-linear components in the other plane.

The correction circuits 24, 37 and 39 may include microprocessors to carry out the required comparisons and calculation under the control of a suitable software program. While the embodiment of Figure 6 shows separate circuits 37 and 39, functions of these circuits may be carried out by a single microprocessor.

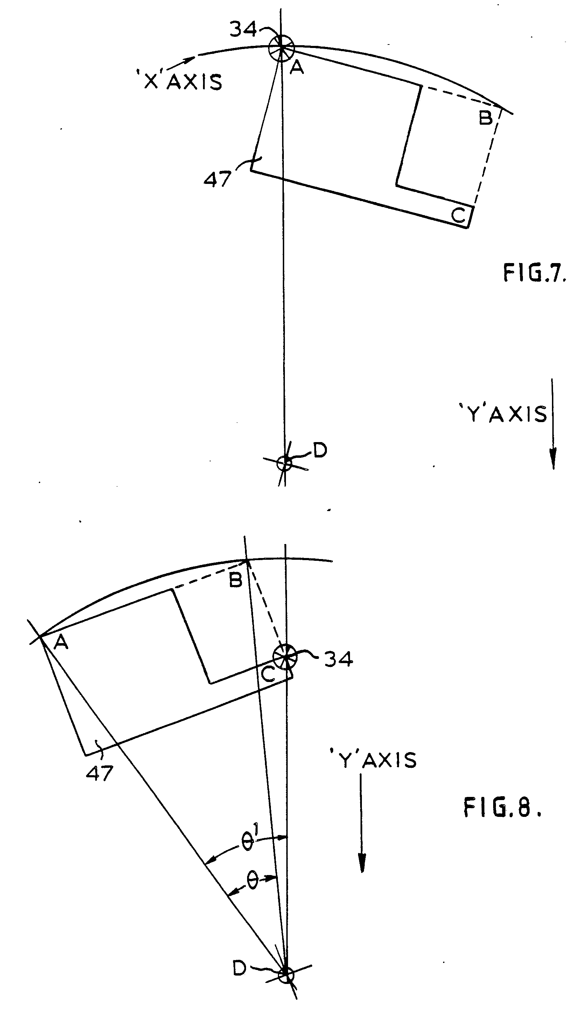

The position transducer system described hereinbefore with reference to Figures 5 and 6 provides precise positional information of the position of the table 31 relative to the point of reference 34 on each of three mutually perpendicular axes independently. However it will be appreciated that measurement of a component is likely to require displacement of the table on at least two of the axes, for example the 'X' and 'Y' axes. Figures 7 and 8 illustrate the effect upon such compound displacement of a rotational component of displacement of a workpiece 47 on the 'X' axis. For the purpose of this description, the table 31 is shown as having a rotational component of displacement in the 'X' axis direction centred on a point 'D' relative to the intermediate slides on which the table is mounted. In Figure 7 a corner 'A' of the workpiece is located in alignment with a point of reference 34. Figure 8 shows the workpiece displaced, by appropriate displacements of the table in the 'X' and 'Y' axis directions, to bring the corner 'C' of the workpiece into alignment with the point of reference. If the workpiece is displaced only in the 'X' axis direction to bring the corner 'B' into alignment with the point of reference, the rotational component of movement about point 'D' would result in a rotation of the workpiece through an angle $\theta$. However in order to bring the corner 'C' into alignment with the point of reference it is necessary to displace the workpiece in the 'X' axis direction to a larger extent such that the rotational component results in a rotation of the workpiece through an angle $\theta^1$ about the point 'D'. The signals from the transducers provide precise data as to the displacement of the table on each of the axes and the sign and magnitude of the error signals obtained from these signals enable the precise dimension of the workpiece to be deduced by calculation.

## Claims

1. A position transducer system for providing an indication of the position or displacement of a first member (10) relative to a second member (14,15) including a first transducer (16) responsive to the relative position of said first and second members in a first direction to produce a first signal characterised by the provision of a second transducer (20) spaced from the first transducer (16) in a second direction perpendicular to said first direction, said second transducer (20) being responsive to the relative position of said first and second members in said first direction to produce a second signal; correction means (24) for deriving an error signal from the first and second signals and for utilising said error signal to compensate the first signal.

2. A position transducer system as claimed in claim 1 further characterised in that said correction means (24) is responsive to non-equality in said first and second signals to generate said error signal.

3. A position transducer system as claimed in claim 1 or 2 for providing an indication of the position of said first member (10) relative to a reference point (23) on said second member (14, 15) further characterised in that said correction means (24) is responsive to a further signal indicative of the position of said first and second transducers (16, 20) relative to said point (23) in said second direction to derive an error signal representing a fraction of any error between said first and second signals, said fraction being dependent upon the position of said reference point relative to the transducers.

4. A position transducer system as claimed in claim 3 further characterised in that said reference point (23) is located intermediate said first and second transducers (16, 20).

5. A position transducer system as claimed in any preceding claim further characterised by the provision of a pair of position transducers (20, 27) responsive to the relative position of said first (10) and second (14, 15) members in said first direction, said transducers of the pair being spaced apart in a third direction perpendicular to said first and second directions, said correction means (24) being responsive to outputs of said pair of transducers (20, 27) to generate a further correction signal.

6. A position transducer system as claimed in claim 5 further characterised in that said first transducer (16) or second transducer (20) is one of said pair of transducers and said correction means (24) is operative to utilise said further correction signal to compensate the first electrical signal.

7. A position transducer system as claimed in any preceding claim further characterised by the provision of display means (25) responsive to said compensated first signal to display the position of said first member (10).

8. A position transducer system as claimed in any preceding claim further characterised in that said signals are electrical signals.

9. A position transducer system as claimed in any preceding claim further characterised in that said transducers (16, 20) are electro-optical devices.

10. A precision slide movable in first and second mutually perpendicular directions characterised by the provision of a first position transducer system (32, 33, 37) as claimed in any preceding claim to provide a compensated signal indicative of the position of said slide (31) relative to a reference point (34) in the first direction ('X' axis) and provided with a second position transducer system (35, 36, 39) as claimed in any preceding claim to provide a compensated signal indicative of the position of the slide (10) relative to said reference point (34) in said second direction ('Y' axis).

11. A precision slide as claimed in claim 10 further characterised in that said first and second transducer systems (32, 33, 37, 35, 36, 39) are provided with means (38, 40) responsive to the compensated first and second electrical signals respectively to display the position in the first and second directions of the slide (31) relative to the reference point (34).

12. Measuring apparatus characterised by the provision of a position transducer system as claimed in any one of claims 1 to 9.

13. Measuring apparatus characterised by the provision of a precision slide as claimed in claim 10 or 11.

14. A machine tool characterised by the provision of a position transducer as claimed in claim 1 to 9.

15. A machine tool characterised by the provision of a precision slide as claimed in claim 10 or 11.

FIG.1.

FIG.2.

FIG.3.

FIG.4.

FIG.5.

'Z' AXIS

'X' AXIS

'Y' AXIS

FIG.6 .

FIG.7.

FIG.8.

| | DOCUMENTS CONSIDERED TO BE RELEVANT | | EP 88307774.5 · |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>US - A - 4 523 380</u> (WRIGHT) <br> * Totality * <br> -- | 1-6, 8-12 | G 01 B 21/04 |
| X | <u>GB - A - 2 042 719</u> (FERRANTI) <br> * Totality * <br> ---- | 1-6, 8-12 | |

| | TECHNICAL FIELDS SEARCHED (Int. Cl.4) |
|---|---|
| | G 01 B 3/00 |
| | G 01 B 5/00 |
| | G 01 B 7/00 |
| | G 01 B 21/00 |
| | G 01 B 11/00 |

| The present search report has been drawn up for all claims | | |
|---|---|---|
| Place of search | Date of completion of the search | Examiner |
| VIENNA | 13-01-1989 | TOMASELLI |

EPO Form 1503 03 82